# EUROPÄISCHE PATENTSCHRIFT

(11) **EP 0 381 642 B1**
(45) Veröffentlichungstag und Bekanntmachung des Hinweises auf die Patenterteilung: **03.05.1995**
(21) Anmeldenummer: 90850013.5
(22) Anmeldetag: 11.01.1990
(51) Int. Cl.: B62D 55/28

(54) **Pistenmaschinenlaufkette**
Endless track for a ski slope machine
Chenille pour engin à damer les pistes de ski

(30) Priorität: 12.01.1989 SE 8900098
(43) Veröffentlichungstag der Anmeldung: 08.08.1990
(73) Patentinhaber: Krainer, Norbert, S-771 00 Ludvika (SE)
(72) Erfinder: Krainer, Norbert, S-771 00 Ludvika (SE)
(74) Vertreter: Kummelsten, Per-Arne

(56) Entgegenhaltungen:
- DE-A- 3 816 829
- DE-B- 2 105 482
- DE-U- 8 910 021
- US-A- 2 786 283
- US-A- 2 786 283
- US-A- 3 390 924
- US-A- 3 829 174
- US-A- 3 883 190
- US-A- 4 194 583

## Beschreibung

Die vorliegende Erfindung sieht eine verbeßerte Pistenmaschinenlaufkette vor.

Eine Pistenmaschine ist ein Raupenkraftfahrzeug mit breiten raupenartigen Fahrbändern, sogenannte Pistenmaschinenlaufketten (weiters hier mit PMLK abgekürzt angegeben), die für die Präparierung von Skipisten vorgesehen sind. Jede PMLK besteht gewöhnlich aus einer großen Anzahl Gliedern in der Form von querstehenden Metallschienen, getragen mit relativ dichten Zwischenräumen, von mehreren (z.B. vier Stück) parallelen Tragbändern aus Gummi oder ähnlichem Material.

Um den Eingriff der PMLK in harte Unterlagen zu verbessern, sind die obengenannten Metallschienen mit nockenähnlichen Spikes versehen, die über die Eingriffskanten der Schienen gegen die Unterlage hervorragen. Verbesserte Seitenstabilität wird mittels finnen- oder flanschähnlichen Spikeorganen zustande gebracht, die in die Bewegungsrichtung gesehen, von den vorderen Seitenflächen der Schienen der PMLK hervorragen. Bei konventionellen PMLK alternieren Schienen mit Spikes und Schienen mit Seitenstabilisatoren.

Eine solche konventionelle PMLK ergibt jedoch Probleme mit Vibrationen und Tendenzen zum Schleudern.

Eine PLMK der Art, wie sie im Oberbegriff des Anspruchs 1 beschrieben ist, ist in US-A-4 194 583 offenbart.

Vorliegende Erfindung sieht eine verbesserte PMLK vor, mit welcher die oben angeführten Probleme mit Vibrationen und Schleudertendenzen bedeutend reduziert werden. Eine solche PMLK hat die im kennzeichnenden Teil von Anspruch 1 angegebenen besonderen Eigenschaften.

Im folgenden wird eine vorteilhafte Ausführungsart der Erfindung anhand von Zeichnungen näher beschrieben, zu der sie jedoch keineswegs irgendwie begrenzt ist. In diesen sind gezeigt:
Fig. 1 eine Seitenansicht von einer Gliederschiene in einer Ausführungsform der PMLK laut der Erfindung,
Fig. 2 eine Ansicht von der Unterseite der Gliederschiene in Fig. 1,
Fig. 3 eine Querschnittsansicht entlang der Schnittlinie A-A in Fig. 2,
Fig. 4a eine Seitenansicht einer Ausführungsform von seitenstabilisierenden Spikes für PMLK laut der Erindung,
Fig. 4b eine Seitenansicht einer Ausführungsform von eventuellen Längsspikes für PMLK laut der Erfindung, und
Fig. 5 eine schematische Illustration eines Beispiels von Spikeanordnungen bei Gliederschienen in einer PMLK laut der Erfindung.

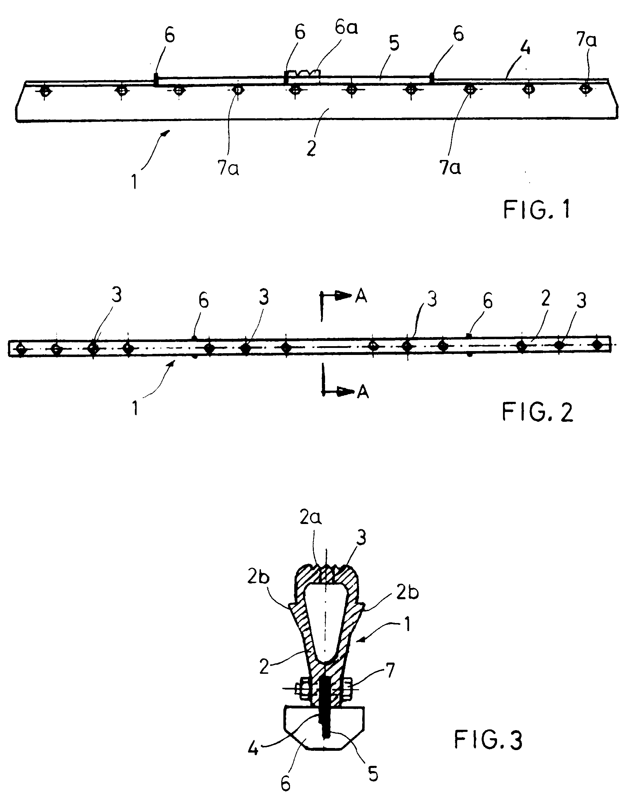

Die in der Fig. 1 bis 3 gezeigte Gliederschiene 1 für PMLK laut der Erfindung besteht aus einem Schienenprofilelement 2, z.B. aus Aluminium (mit z.B. einer Länge von 1500 mm), dessen untere Seite mit einer Mehrzahl von Löchern 3 versehen ist zur Befestigung auf parallelen Tragbändern aus Gummi (hier nicht gezeigt) in und zur Bildung von einer PMLK (in dem gezeigten Fall vier Gruppen von Löchern 3 zur Befestigung der Schiene 1 in vier parallelen Gummitragbändern). Um die Fixierung auf den Gummibändern zu verbessern, ist die Unterseite der Schiene 1 zweckmäßig gerieft, wie angedeutet bei 2a in Fig. 3. In ihrem Oberteil, d.h. dem Teil, der gegen die Unterlage geht, ist die Gliederschiene 1 mit einer Greifschiene 4 aus hartem Material, z.B. Stahl, versehen und im wesentlichen von gleicher Länge wie die Schiene 1. Eine zusätzliche, kürzere Greifschiene 5, z.B. auch aus Stahl (mit beispielsweise ca 700 mm Länge), die z.B. ca 10 mm über die Greifschiene 4 hervorragt und deren Funktion weiter unten beschrieben wird, ist im wesentlichen zentral auf der Schiene 1 angeordnet (hauptsächlich über den Treibradpartien der Gummibänder) und trägt die seitenstabilisierenden Spikes 6. Die Letzteren sind zweckmäßig auf der Greifschiene 5 aufgeschweißt und ragen zweckmäßig z.B. ca 10 mm über der Oberkante der Greifschiene 5 hervor. Abhängig von den Umständen ist eine zweckmäßige Anzahl von Spikes ca 1 bis 10. Die Greifschienen 4 und 5 sind in dem abgebildeten Fall in der Schiene 1 mit Schraubverbindungen 7 durch Löcher 7a in der Schiene 2 befestigt.

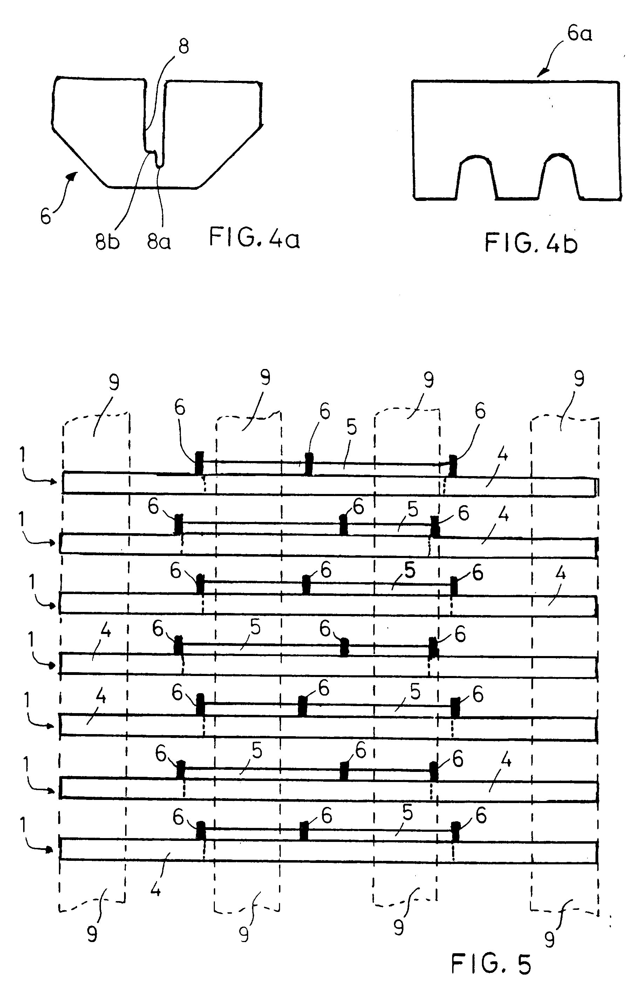

Die Spikes 6 haben hier die Ausführung eines Plättchens mit einer Form, die am besten aus Fig. 4a hervorgeht. Von der Unterkante des Plättchens erstreckt sich eine zentrale Aussparung 8 mit einem tieferen Teil 8a für die Schiene 5 und einem weniger tiefen Teil 8b für die Greifschiene 4 in das Plättchen. Die seitenstabilisierende Eigenschaft des Spikes 6 kommt dadurch zustande, daß indem dieser quer zur Schiene 1, d.h. im rechten Winkel zur Längsrichtung der Schiene, wie aus Fig. 3 hervorgeht, montiert wird. Man sieht ein, daß die Spikes 6 einfach getauscht und in verschiedene Positionen versetzt werden können.

In Fig. 1 bezeichnet 6a einen eventuell längs der Gliederschiene 1 angeordneten Spike, deßen nähere Ausformung beßer aus Fig. 4b hervorgeht. Ein oder mehrere solche Längsspikes 6a können zusätzlich zu den seitenstabilisierenden Spikes 6 an mindestens einigen der Gliderschienen 1 befestigt sein. Die Längsspikes 6a sind, wie die Spikes 6, zweckmäßig auch auf der Greifschiene 5 aufgeschweißt und ragen ebenso ca 10 mm über der Oberkante der Greifschiene 5 hervor. In Fig. 1 kann z.B. der Längsspike 6a den gezeigten mittleren seitenstabilisierenden Spike 6 ersetzen oder zusätzlich zu diesem angeordnet sein.

Die in Fig. 3 illustrierte Gliederschiene 1 ist mit längs der Schiene gegenüberstehenden "Ohren" oder Flansche 2b versehen. Diese Flanschen verhindern, daß z.B. Steine oder dergleichen zwischen die Steuerungsbügel der PMLK und die Treibräder eindringen und die Treibräder dabei beschädigen.

Eine PMLK kann z.B. 75 Gliederschienen 1 aufweisen. In Fig. 5 wird schematisch ein Beispiel einer PMLK-anordnung der mit Spikes versehenen Gliederschienen 1 gezeigt, hier der Deutlichkeit halber nur durch die beiden Greifschienen 4 und 5 repräsentiert. Die örtliche Lage der vier Gummitragbänder 9, auf welchen die Gliederschienen 1 befestigt sind, sind mit gestrichelten Linien angedeutet. Die zentralen Greifschienen 5 sind hier abwechselnd seitlich etwas verschoben, gleichzeitig wie die gegenseitige Lage der drei Spikes 6 auch seitlich abwechseln. Nachdem die Spikes 6 auf jeder Schiene oder "Stufe" 1 gleich hoch sind, können diese, wie oben erwähnt, einfach (da sie schweißbar sind) in verschiedene Lagen gebracht werden, um den besten Eingriff in harte Unterlage zu erreichen. Dadurch werden auch stark verringerte Vibrationen erreicht. Der Eingriffin harte Unterlage wird zusätzlich durch die herausragende Greifschiene 5, die die Spikes trägt, verbessert. Nachdem die Treibräder der Pistenmaschine im mittleren Teil der Tragbänder anliegen (hier im Eingriff mit den beiden zentralen Gummitragbändern 9), verteilt sich also auf harter Unterlage wesentlich das gesamte Maschienengewicht auf die kürzeren Mittenschienen 5, was einen höheren Anliegedruck und damit einen besseren Eingriff ergibt, wie auch bessere Seitengleit- und Klettereigenschaften.

Es hat sich erwiesen, daß man mit der PMLK von der oben beschriebenen Type im Verhältnis zu konventionellen PMLK wenigstens 25% geringere Vibrationen erreicht, wobei gleichzeitig wie die Neigung zu lästigem Schleudern so gut wie beseitigt ist. Nachdem spezielle Seitenstabilisatoren nicht nötig sind, vereinfacht und verbilligt sich die Erzeugung und Wartung der PMLK wesentlich im Vergleich zu konventionellen PMLK.

## Patentansprüche

1. Pistenmaschinenlaufkette, umfassend eine Mehrzahl quer zur Bewegungsrichtung der Laufkette angeordnete Gliederschienen (1), die von wenigstens einem biegsamen Tragband (9) getragen werden, wobei jede Schiene (1) wenigstens ein längs- und ein seitenstabilisierendes Spikeorgan (6a, 6) trägt, die auf aus den Gliederschienen (1) hervorragenden Greifschienen (5) angeordnet sind, wobei die Greifschienen (5) von geringerer Länge sind als die Gliederschienen (1) und wobei alle längs- und seitenstabilisierende Spikeorgane (6a, 6) gleich weit über die Greifschienenkanten hervorragen, **dadurch gekennzeichnet**, daß jede Gliederschiene (1) eine zusätzliche längere Greifschiene (4) von im wesentlichen gleicher Länge wie die Gliederschiene (1) aufweist, über welche die genannte kürzere Greifschiene (5) hervorragt.

2. Pistenmaschinenlaufkette nach Patentanspruch 1,
**dadurch gekennzeichnet**, daß die genannten längs- und seitenstabilisierenden Spikeorgane (6a, 6) im wesentlichen plättchenförmige Elemente (6a, 6) sind, welche quer zur Gliederschiene (1) angeordnet sind.

3. Pistenmaschinenlaufkette nach Patentanspruch 1 oder 2,
**dadurch gekennzeichnet**, daß die genannten längs- und seitenstabilisierenden Spikeorgane (6a, 6) in der genannten kürzeren Greifschiene (5) eingeschweißt sind.

4. Pistenmaschinenlaufkette nach einem der Patentansprüche 1-3, **dadurch gekennzeichnet**, daß die genannten längs- und seitenstabilisierenden Spikeorgane (6a, 6) auf mindestens einer der Gliederschienen (1) einen oder mehrere längs der Gliederschiene (1) angeordneten und von dieser hervorragenden Spike (6a) umfassen.

5. Pistenmaschienenlaufkette nach jenem der Patentansprüche 1-5, **dadurch gekennzeichnet**, daß die Gliederschiene (1) im Befestigungsteil ein Paar gegenüberstehende Längsflansche (2b) aufweisen, welche verhindern, daß Steine oder dergleichen zwischen die Steuerungsbügel der Pistenmaschinenlaufkette und die Treibräder eindringen können.

## Claims

1. A slope machine track drive comprising a plurality of link bars (1) arranged transversely to the moving direction of the track drive, which are supported by at least one flexible carrying strap (9), each bar (1) carrying at least one longitudinally and laterally stabilizing spike organ (6a, 6), which are arranged on grip bars (5) protruding from the link bars (1), the grip bars (5) having a length less than that of the link bars (1) and the distance which all longitudinally and laterally stabilizing spike organs (6a, 6) protrude from the grip bar edges being equal, **characterized in that** each link bar (1) has an additional longer grip bar (4) of substantially equal length as the link bar (1), from which said shorter grip bar (5) protrudes.

2. The slope machine track drive according to claim 1, **characterized in that** said longitudinally and laterally stabilizing spike organs (6a, 6) are substantially lamellalike elements (6a, 6) arranged transversely to the link bar (1).

3. The slope machine track drive according to claim 1 or 2, **characterized in that** said longitudinally and laterally stabilizing spike organs (6a, 6) are welded into said shorter grip bar (5).

4. The slope machine track drive according to any one of claims 1 to 3, **characterized in that** on at least one of the link bars (1) said longitudinally and laterally stabilizing spike organs (6a, 6) comprise one or more spikes (6a) arranged along the link bar (1) and protruding therefrom.

5. The slope machine track drive according to any one of claims 1 to 4, **characterized in that** in the mounting member the link bar (1) have a pair of opposite longitudinal flanges (2b) preventing that stones or the like may penetrate between the control brackets of the slope machine track drive and the driving wheels.

## Revendications

1. Chenille pour engin servant à damer les pistes de ski, comprenant une multiplicité de patins en forme de barres (1) qui s'étendent transversalement par rapport à une direction de déplacement de la chenille et sont portées par au moins une bande de support flexible (9), chaque barre (1) portant au moins un organe en forme de pointe (6,6a), qui réalise une stabilisation longitudinale et une stabilisation latérale, ces organes étant disposés sur des rails d'accrochage (5) qui font saillie hors des patins en forme de barres (1), les rails d'accrochage (5) possédant une longueur inférieure aux patins en forme de barres (1), et tous les organes en forme de pointes (6,6a), qui réalisent une stabilisation longitudinale et une stabilisation latérale, faisant saillie au même degré audelà des arêtes des rails d'accrochage, caractérisée en ce que chaque patin en forme de barre (1) possède un rail d'accrochage supplémentaire plus long (4) possédant une longueur essentiellement égale à celle des patins en forme de barres (1) et sur laquelle lesdits rails d'accrochage (5) plus courts font saillie.

2. Chenille pour engin à damer les pistes de ski selon la revendication 1, caractérisée en ce que lesdits organes en forme de pointes (6a,6), qui réalisent une stabilisation longitudinale et une stabilisation latérale, sont essentiellement des éléments en forme de plaquettes (6a,6), qui sont disposés transversalement par rapport aux patins en forme de barres (1).

3. Chenille pour engin à damer les pistes de ski selon la revendication 1 ou 2, caractérisée en ce que lesdits organes en forme de pointes (6a,6), qui réalisent une stabilisation longitudinale et une stabilisation latérale, sont soudés dans ledit rail d'accrochage plus court (5).

4. Chenille pour engin à damer les pistes de ski selon l'une des revendications 1-3, caractérisée en ce que lesdits organes en forme de pointes (6a,6), qui réalisent une stabilisation longitudinale et une stabilisation latérale, d'au moins l'un des patins en forme de barres (1) comprennent une ou plusieurs pointes (6a) qui sont disposées le long du patin en forme de barre (1) et font saillie à partir de cet élément.

5. Chenille pour engin à damer les pistes de ski selon l'une des revendications 1-4, caractérisée en ce que les patins en forme de barres (1) possèdent, dans la partie de fixation, un couple de brides longitudinales opposées (2b), qui empêchent que des pierres ou analogues puissent pénétrer entre les étriers de commande de la chenille pour engin servant à damer les pistes de ski et des roues motrices.
